# EUROPEAN PATENT SPECIFICATION

(11) **EP 2 143 330 B1**
(45) Date of publication and mention of the grant of the patent: **04.09.2013**
(21) Application number: 09164914.5
(22) Date of filing: 08.07.2009
(51) Int. Cl.: A01K 97/10

(54) **Fishing rod pod**
Angelrutenhalter
Support de canne à pêche

(30) Priority: 11.07.2008 IT PS20080013 U
(43) Date of publication of application: 13.01.2010
(73) Proprietor: Meccanica Vadese S.r.l., 61034 Fossombrone (IT)
(72) Inventor: Micheli, Bruno, 61046, Piobbico (PU) (IT)
(74) Representative: Gustorf, Gerhard

(56) References cited:
- EP-A- 1 327 387
- EP-A- 1 616 485
- DE-A1- 10 341 153
- FR-A- 2 843 278
- GB-A- 2 360 686

## Description

The present invention refers to a fishing rod pod, as set forth in the preamble of claim 1.

### Prior art

Known in non-migratory fishing, especially fresh water fishing also referred to as "*carp fishing*" is the tendency of using, during the long stationing times required by such technique, rod pods for a plurality of fishing rods simultaneously loaded and fishing.

In order to attain their purpose in a more efficient manner, such pods must be lightest possible - given that they are to be transferred to the fishing site, which is often not reachable using means of transport, at least in the immediate vicinity - but simultaneously stable and sturdy.

A fishing rod pod having the features of the preamble of claim 1 is disclosed in EP-A 1 327 387. However, in this known device the legs are fastened in the median part of the support bar without the possibility to vary their position.

On the other hand, GB - A 2 360 686 shows an angling stand in which the legs are mounted at the distal end of the support and it is again not possible to vary their position with regard to the support.

### Object of the invention

It is an object of the invention to provide a fishing rod pod that has an increased flexibility with regard to its possibility to position it in different places by having on one and the same device the possibility of positioning groups of legs at a distal position and in a median position, such that the device is most adjustable and polyvalent as possible in its range of employment.

A further object of the invention is that of providing an innovative and functional fishing rod pod which is light and small for transport but simultaneously sturdy and stable when utilised to perform its functions.

Further object of the present invention is that of attaining the previous objects by means of a simple and effective device, safe in its operation and relatively inexpensive considering the results achieved therewith.

### Summary of the invention

These and other objects are attained by a fishing rod pod having the characterizing features of claim 1. Further characteristics are set forth in the dependent claims.

### Description of the attached drawings

The characteristics and advantages of the device according to the present finding shall be more apparent from the following detailed description of a preferred but not exclusive embodiment thereof, strictly provided for exemplifying and non-limiting purposes in the five attached drawings, wherein:
Figure 1 shows a fishing rod pod according to the present finding in a first operative configuration thereof;
Figure 2 shows a fishing rod pod according to the present finding in a second operative configuration thereof;
Figures 3, 4 and 5 show respective details of the fishing rod pod according to the present finding.

### Static description of the embodiment

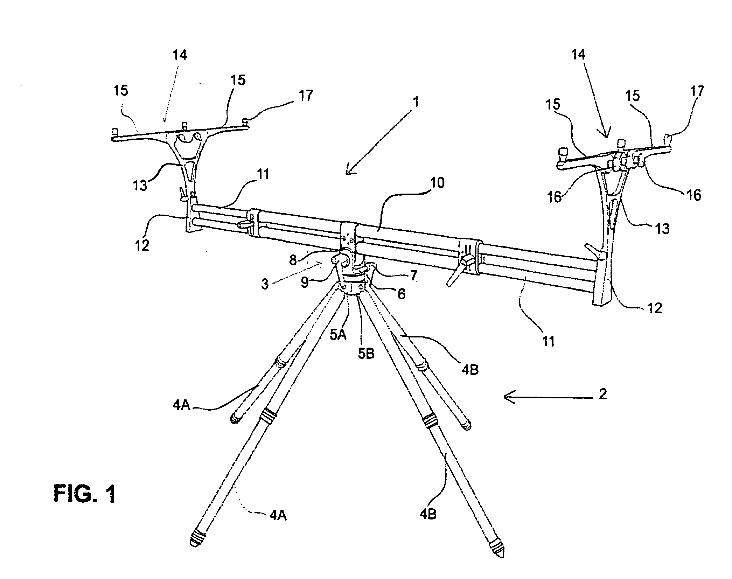

Referring to such figures and in particular to figure 1, a fishing rod pod according to the present finding, preferably made of aluminium, made up of a stand 2 with an orbital head 3, supported by four telescopic legs 4 proximately articulated and tiltable is indicated in its entirety with 1.

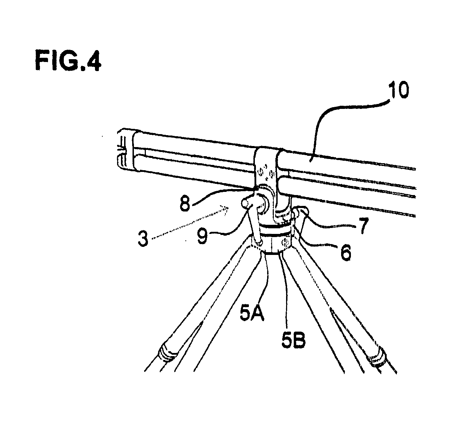

The legs 4 are associated to the orbital head 3 in pairs 4A and 4B through two positionable half-blocks 5A and 5B, respectively fixed by screwing beneath the head 3 itself, where the fixing of the legs 4A and 4B to the half-blocks 5A and 5B is actuated by means of joints of the known type which allow varying the inclination of the legs 4A and 4B themselves (see in particular detail of figure 4)

At the lower part, the orbital head 3 comprises a disc-shaped joint 6 for circular movement, which may be locked in any direction by means of a fastening lever 7, and - at the upper part - a bracket joint 8, for angular movement on the planes of the rotational axis of disc-shaped joint 6 which may be locked at any angle by means of a fastening lever 9 (see in particular detail of figure 4).

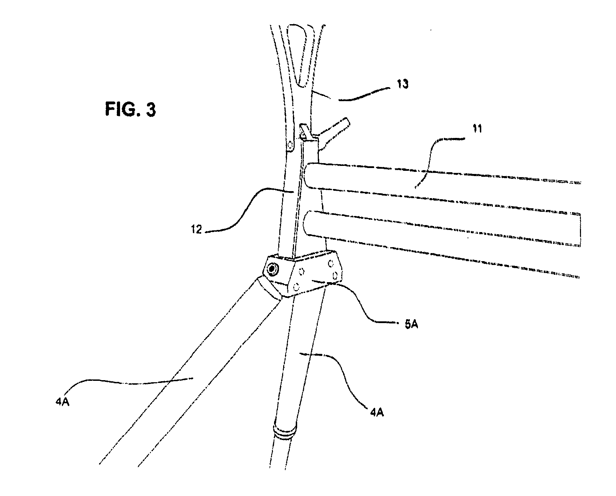

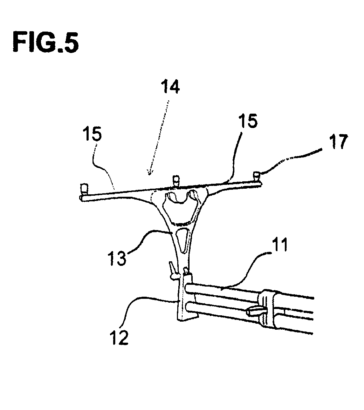

Fixed to the bracket 8 - in the median part - is a two-tubular support member 10 (see in particular detail of figures 3 and 5), provided with opposite distal telescopic portions 11, associated at whose respective apexes are twinning shanks 12, hinged above which are respective uprights 13, bearing buz bars 14 for holding fishing rods (not illustrated) at the upper part.

The shanks 12 bear - at the lower part - screwing seats for association to the positionable half-blocks 5A and 5B (see in particular detail of figure 3).

The buz bars 14 are symmetrically articulated in tiltable wing segments 15, lockable by means of screw knobs 16 and provided with commercial elements 17 for fixing the rod pod and bait sensor (see in particular detail of figure 5), for the functions outlined hereinafter.

### Dynamic description of the embodiment

After the static description of an embodiment of the fishing rod pod according to the present finding, following is the dynamic description, i.e. the related operation:
the pod 1 may be easily transferred folded to the fishing site, in that it is relatively light, given that it is made up of a simple aluminium pipe structure, with few elements made of a block element, still preferably made of aluminium;
once at the fishing site, the rod can be quickly configured to operating condition, by simply ejecting the respective telescope-like elements, fixable in a known manner in the desired extension (see in particular figure 1);
regardless of the inclination and the unevenness of the ground, the four legs 4A and 4B, in combined synergy with the movement of the joints 6 and 7 of the orbital head 3, allow the support member 10 to acquire the desired position and inclination with respect to the ground plane, which is also the inclination acquired by the fishing rods supported by the buz bars 14 at the top of the uprights 13 (see in particular figure 1).

The arrangement of the fishing rods may be further adjusted, to the specific variation of needs during the fishing session, without requiring to intervene on the set-up of the entire pod 1, but varying the inclination of the wing segments 15 of the buz bars 14 and fixing it by means of screw knobs 16 (see in particular detail of figure 5).

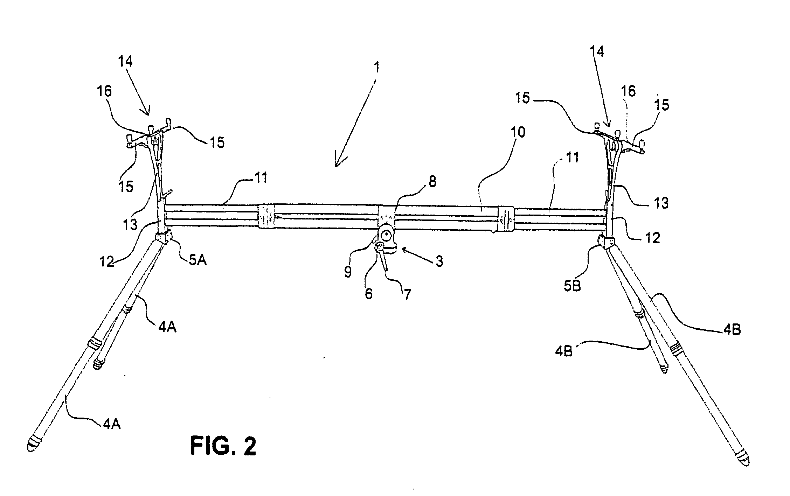

If required - considering the stationing site, or other specific places and/or fishing techniques - the stability of the rod pod 1 according to the present finding may be further increased by positioning the two half-blocks 5A and 5B, and hence the pairs of legs 4A and 4B, from the closed position beneath the orbital head 3 (see in particular detail of figure 4), at mutual distal position, respectively at the apical uprights 13 of the telescopic support member 10 (see figures 2 and 3) respectively screwing the half-blocks 5A and 5B to the shanks 12;

In such position the inclination of the telescopic support 10 may be achieved by intervening on the length of the legs 4A and 4B and on the posture of the joints that connect them respectively to the half-blocks 5A and 5B.

### Alternative embodiments

Obviously, in further alternative embodiments, still falling within the innovation concept underlying the embodiment outlined above and claimed hereinafter, the fishing rod pod according to the present finding may be obtained by means of equivalent technical and structural elements, or implemented with further integrating solutions, just like all configurations of the respective elements may be varied to suit the purpose.

### Advantages of the finding

As clearly observable from the previous detailed description of the preferred embodiments, the fishing rod pod according to the present finding offers advantages corresponding to the attainment of the preset objects: as a matter of fact, the fishing rod integrates a functional, modular, polyvalent and inexpensive device, that is easy to transport, for maintaining a plurality of loaded rods in fishing set-up and position at any environmental condition.

## Claims

1. Fishing rod pod comprising a stand (2) with a plurality of legs (4) pivoted by means of an orbital head (3) to a tiltable telescopic support member (10) in the median part of said support member (10) which apically bears respective uprights (13) provided with articulated buz bars (14), **characterized in that** said legs (4) are arranged in two groups (4A, 4B) each of which is connected to a positionable half-block (5A, 5A) provided with means for alternative fixing said half-blocks (5A, 5B) to said orbital head (3) or to said apical uprights (13).

2. Fishing rod pod according to claim 1, wherein each of said groups (4A, 4B) comprises two telescopic legs (4).

3. Fishing rod pod according to claim 1 or 2, wherein said fixing means (12) are screws for fixing said half-blocks (5A, 5B) beneath said orbital head (3) or beneath a corresponding shank (12) associated to a distal telescopic portion (11) of said support member (10).

4. Fishing rod pod according to any of the preceding claims, wherein said orbital head (3) comprises at its lower part a disc-shaped joint (6) for circular movement, which can be locked in any direction by means of a fastening lever (7), and at its upper part a bracket joint (8) for angular movement on planes of the rotation axis of said disc-shaped joint (6), which may be locked at any angle by means of a fastening lever (9).

5. Fishing rod pod according to claim 4, wherein to the upper part of said orbital head (3) is fixed a two-tubular support member (10) provided with opposite distal telescopic portions (11) at whose apexes are associated twinning shanks (12) above which are hinged respective uprights (13) bearing at their upper part buz bars (14).

6. Fishing rod pod according to claim 5, wherein said buz bars (14) are symmetrically articulated in tiltable wing segments (15) by means of screws (16) and provided with commercial elements (17) for fixing the rod pod and bait sensor.

7. Fishing rod pod according to claim 5 or 6, wherein said twinning shanks (12) bear at their lower part screwing seats for fastening the positionable half-blocks (5A, 5B).

8. Fishing rod pod according to any of the preceding claims, wherein said legs (4A, 4B) are fixed to said half-blocks (5A, 5B) by means of joints which allow varying the inclination of said legs (4A, 4B).

## Patentansprüche

1. Angelrutenständer, umfassend ein Gestell (2) mit mehreren Beinen (4), die über einen drehbaren Kopf (3) an einem kippbaren, teleskopischen Träger (10) in dessen Mitte angelenkt sind, wobei von den Enden des Trägers (10) Aufsätze (13) mit schwenkbaren Auflagetraversen (buz bars 14) abstehen, **dadurch gekennzeichnet, dass** die Beine (4) in zwei Gruppen (4A, 4B) angeordnet sind, von denen jede an einem verstellbaren Halbblock (5A, 5B) mit Mitteln zur alternativen Befestigung der beiden Halbblöcke (5A, 5B) an dem drehbaren Kopf (3) oder an den Aufsätzen (13) verbunden ist.

2. Angelrutenständer nach Anspruch 1, **dadurch gekennzeichnet, dass** jede der beiden Gruppen (4A, 4B) zwei teleskopisch verstellbare Beine (4) hat.

3. Angelrutenständer nach Anspruch 1 oder 2, **dadurch gekennzeichnet, dass** die Befestigungsmittel (12) Schrauben zur Fixierung der Halbblöcke (5A, 5B) unter dem Kopf (6) oder unter einer Stütze (12) sind, die mit einem distalen Teleskopabschnitt (11) des Trägers (10) verbunden ist.

4. Angelrutenständer nach einem der vorhergehenden Ansprüche, **dadurch gekennzeichnet, dass** der Kopf (3) in seinem unteren Bereich ein scheibenförmiges Gelenk (6) für eine kreisförmige Bewegung trägt, das in jeder Winkelstellung mittels eines Feststellhebels (7) fixierbar ist, während er im oberen Bereich ein Bügelgelenk (8) für Winkelbewegungen in Ebenen der Drehachse des scheibenförmigen Gelenks (6) hat, die mittels eines Feststellhebels (9) fixierbar sind.

5. Angelrutenständer nach Anspruch 4, **dadurch gekennzeichnet, dass** an dem oberen Bereich des Kopfes (3) ein aus zwei Rohren bestehender Träger (10) mit gegenüberliegenden, distalen Teleskopabschnitten (11) befestigt ist, an dessen Enden Verbindungsstützen (12) befestigt sind, auf denen Aufsätze (13) schwenkbar angebracht sind, deren obere Enden die Auflagetraversen (14) tragen.

6. Angelrutenständer nach Anspruch 5, **dadurch gekennzeichnet, dass** die Auflagetraversen (14) als symmetrische, mittels Schrauben (16) feststellbare Flügel (15) ausgebildet sind, die handelsübliche Elemente (17) zur Halterung der Angelrute und von Ködersensoren aufweisen.

7. Angelrutenständer nach Anspruch 5 oder 6, **dadurch gekennzeichnet, dass** die Verbindungsstützen (12) an ihrem unteren Bereich Schraubsitze zur Befestigung der einstellbaren Halbblöcke (5A, 5B) aufweisen.

8. Angelrutenständer nach einem der vorhergehenden Ansprüche, **dadurch gekennzeichnet, dass** die Beine (4A, 4B) mit den Halbblöcken (5A, 5B) durch Gelenke verbunden sind, die eine Winkelverstellung der Beine (4A, 4B) ermöglichen.

## Revendications

1. Support de canne à pêche comprenant un chevalet (2) à plusieurs pieds (4) articulés au moyen d'une tête pivotante (3) au centre d'un bras télescopique (10) basculant, dont les extrémités sont munies de saillies (13) avec des traverses d'appui pivotantes (buz bars 14), **caractérisé par le fait que** les pieds (4) sont divisés en deux unités (4A, 4B) chacune étant reliée à un semi-bloc réglable (5A, 5B) qui présente des moyens pour la fixation des deux semi-blocs (5A, 5B) alternativement soit à la tête pivotante (3), soit aux saillies (13).

2. Support de canne à pêche selon la revendication 1, **caractérisé par le fait que** chaque unité (4A, 4B) comprend deux pieds télescopiques (4).

3. Support de canne à pêche selon la revendication 1 ou 2, **caractérisé par le fait que** les moyens d'attache (12) sont des vis pour fixer les semi-blocs (5A, 5B) sous la tête (6) ou sous un montant (12) relié à une section télescopique distale (11) du bras (10).

4. Support de canne à pêche selon la revendication 3, **caractérisé par le fait que** la partie inférieure de la tête (3) est munie d'une articulation discoïdale (6) permettant un mouvement rotatif apte à être bloqué par un levier de serrage (7), tandis que sa partie supérieure présente une articulation à fourchette (8) permettant des ajustages angulaires dans des plans de l'axe de rotation de l'articulation discoïdale (6) aptes à être bloqués par un levier de serrage (9).

5. Support de canne à pêche selon la revendication 4, **caractérisé par le fait qu'**à la partie supérieure de la tête (3) est fixé un bras (10) constitué de deux tubes munis de sections télescopiques distales (11) opposées, dont les extrémités sont reliées à des montants de raccord (12) sur lesquels sont montées les sailles orientables (13) dont les extrémités supérieures portent les traverses d'appui (14).

6. Support de canne à pêche selon la revendication 5, **caractérisé par le fait que** les traverses d'appui (14) sont formées par des ailes symétriques (15) aptes à être bloquées par des vis (16) et munies d'éléments d'usage dans le commerce (17) pour la fixation de la canne de pêche ou de détecteurs de leurres.

7. Support de canne à pêche selon la revendication 5 ou 6, **caractérisé par le fait que** les montants de raccord (12) présentent dans leurs zone inférieure des logements à vis permettant la fixation des semi-blocs réglables (5A, 5B).

8. Support de canne à pêche selon une des revendications précédentes, **caractérisé par le fait que** les pieds (4A, 4B) sont reliés aux semi-blocs (5A, 5B) par des articulations permettant un ajustage angulaire des pieds (4A, 4B).
